# EUROPEAN PATENT SPECIFICATION

(11) **EP 2 758 234 B1**
(45) Date of publication and mention of the grant of the patent: **24.01.2018**
(21) Application number: 12762588.7
(22) Date of filing: 21.09.2012
(51) Int. Cl.: B32B 15/20, B32B 3/24, B32B 15/085, B32B 15/09, B32B 15/14, B32B 27/32, B32B 27/36, B32B 27/12, B32B 5/02

(54) **CONDUCTIVE COMPOSITE STRUCTURE OR LAMINATE**
LEITFÄHIGE VERBUNDSTRUKTUR ODER LEITFÄHIGES LAMINAT
STRUCTURE COMPOSITE CONDUCTRICE OU STRATIFIÉ CONDUCTEUR

(30) Priority: 23.09.2011 GB 201116472
(43) Date of publication of application: 30.07.2014
(73) Proprietor: Hexcel Composites Limited, Duxford Cambridgeshire CB22 4QB (GB)
(72) Inventor: ELLIS, John, Duxford Cambridgeshire CB22 4SF (GB); FISSET, Emilie, London N9 8PA (GB); DOSMAN, Elizabeth, Duxford Cambridgeshire CB22 4QD (GB)
(74) Representative: Pols, Ronald Maarten
(86) International application number: PCT/EP2012/068714
(87) International publication number: WO 2013/041712

(56) References cited:
- WO-A2-2009/104040
- WO-A2-2012/020109
- DATABASE WPI Week 198634, Derwent Publications Ltd., London, GB; AN 1986-222988 & JP S61 154 812 A (TOHO RAYON KK) 14 July 1986
- DATABASE WPI Week 200432, Derwent Publications Ltd., London, GB; AN 2004-342625 -& JP 2004 043653 A (TORAY IND INC) 12 February 2004

## Description

### Technical Field

The present invention relates to the use of a support layer during slitting of a structure or a laminate, particularly but not exclusively to the slitting of an electrically conductive surface structure or laminate.

### Background

Composite materials have well-documented advantages over traditional construction materials, particularly in providing excellent mechanical properties at very low material densities. As a result, the use of such materials is becoming increasingly widespread and their fields of application range from "industrial" and "sports and leisure" to high performance aerospace components.

Prepregs, comprising a fibre arrangement impregnated with resin such as epoxy resin, are widely used in the generation of such composite materials. Typically a number of plies of such prepregs are "laid-up" as desired and the resulting laminate is cured, typically by exposure to elevated temperatures, to produce a cured composite laminate.

Composite materials have a reduced electrical conductivity in comparison to metals. This is particularly a problem in aerospace structures in view of their exposure to lightning strikes which can damage the composite air frame.

To improve the electrical conductivity of composite materials, conductive additives may be used in the resin. However this alone may not result in satisfactory conductivity performance. Also, metal may be applied to the surfaces of the composite structures to improve their conductivity. This is however labour intensive and therefore inefficient. WO 2009/104040 discloses a tape for use in automated tape laying machines that includes a multi-layer substrate composed of a plastic layer that includes at least one plastic film having an outer film surface and an inner film surface. The plastic film is adhered to a fibrous layer so that the inner surface of the fibrous layer is bonded to the inner film surface. An uncured composite material layer composed of a fibrous reinforcement and an uncured resin matrix is releasably adhered to either the plastic layer surface or the outer fiber layer surface to provide a tape suitable for use in an automatic tape layer. WO 2012/020109 discloses a strip of curable prepreg comprising unidirectional fibres aligned with the length of the strip, the fibres being at least partially impregnated with curable thermosetting resin and comprising a flexible polymeric sheet on an outer face of the strip, wherein the strip has a substantially rectangular cross-section defining a width and a thickness of the strip.

JP S61 154812 discloses a process in which unidirectional prepreg is rolled together with a double-side releasable polyester film, and the obtained roll is cut along the direction perpendicular to the axis of the roll. JP 2004 342652 discloses a slit tape prepreg containing a reinforcing fibre bundle oriented in one direction and impregnated with a resin composition, and slit in the fibre direction.

The present invention aims to mitigate or at least obviate the above described problems and/or to provide advantages generally.

### Summary of the Invention

According to the invention, there is provided a use as defined in any one of the accompanying claims.

Optionally, the fibrous layer may be in the form of a light weight nonwoven fibrous material of a weight in the range of from 1 to 100 g/m² (gsm), preferably 1 to 50 g/m² and more preferably 1 to 20 g/m². The fibrous layer ensures good surface qualities of the cured composite part as this material is fully wetted out by resin upon cure.

Optionally, the laminate or structure is unimpregnated. The fibrous layer may be melt bonded to the conductive layer to adhere the fibrous layer. The fibrous layer may comprise a thermoplastic material such as a polyamide.

Optionally, the fibrous layer may also comprise a reinforcement fibrous material which may be woven or non woven and of a weight which exceeds 50 g/m².

Optionally, the conductive layer and fibrous layer may be at least partially impregnated with a resin. The conductive layer and fibrous layer may form a preimpregnated moulding material or prepreg. The support material may be located on the surface of the prepreg.

The slit strips or tape are formed by passing the laminate or structure of the invention through a slitting or cutting unit to produce a plurality of parallel strips. The width of the strips produced are very tightly controlled and can be specified to within a fraction of a millimetre.

The strips are wound onto a bobbin or spool. Such a bobbin is usually capable of holding several thousands of metres of such strip material. The bobbins are adapted for use with automated lay-up apparatus, which automatically unravels the tape, removes the backing sheet and lays down the strips on the surface of a mould. Typically a plurality of conductive strips are laid down parallel to each other whereby the strips are in contact with one another or they overlap to ensure optimum electrical conductivity over the surface of the part.

Lay-up of the strips or tapes using an automated tape laying apparatus is a much more efficient method of laying up the conductive surface material as compared to conventional hand lay-up. However, it does impose additional constraints on the dimensions of the strip, if it is desired to automatically lay down the prepreg at an acceptable quality standard.

The inventors have found that the conductive strips immediately following slitting have a very small variation in their width. The inventors have now found that if the strips contain a polymeric sheet as its support layer, then the conductive layer does not distort during slitting and the width tolerance of the strips remains small even during application of the strip material in the mould using automated machinery.

Additionally, and more importantly, it has been found that the variation in the width of the strips produced in this way is significantly reduced, providing a tighter tolerance and allowing close contact between adjacent strips.

The strips produced are typically continuous in their length, and can have lengths of several thousands of metres. Due to processing limitations such lengths may involve a splice but this is considered to be a continuation of the same strip. Thus, the strips can have a length of at least 500 m, preferably at least 1,000 m, more preferably at least 2,000 m, most preferably of least 4,000 m.

The substantially rectangular cross-section of the strip is typically well-defined with a clear width and a clear thickness. In view of the fact that the polymeric sheet was present during slitting there is no initial difference in width between the polymeric sheet and the remainder of the strip. The width of the strips is typically in the range of from 2.0 to 50 mm, preferably from 3.0 to 25 mm. However depending on the applications the width may also range from 10 mm to 3500 mm, or from 50 mm to 3000 mm, or from 100 mm to 2000 mm, or from 150 mm to 2000 mm, or from 200 mm to 2000 mm. The variation around these widths should be as small as possible to ensure accurate lay up of the slit tape or strip. The thickness is typically in the range of from 0.05 to 1.0 mm, primarily depending on the quantity of fibres per strip as desired.

More preferably the average width of the tape may be 1/8", 1/4" 1/2", 1", 3", 6" or 12" corresponding to 3.2 mm, 6.4 mm, 12.7 mm, 25.4 mm, 76.2 mm, 152.4 mm or 304.8 mm respectively. The average width may be measured by taking a number of width measurements over fixed lengths along the tape as described below and calculating the average width from these measurements. The tolerance or variation around the average is a measure of the width variation. Within the context of this application, the average width is measured by sampling the width at 50 regular intervals along the length of the tape using a benchtop laser micrometer (BenchMike 283), adding up all of the measurements and dividing the measurements by 50. Measurements were taken every 0.02 m along aim length of tape. From these measurements, the standard deviation of width measurements for the strip is calculated. Also the maximum variation around the average width measurement is calculated.

Optionally, the structure or laminate sheet comprises a second polymeric sheet on the other outer face of the laminate during the slitting stage.

As discussed above, the strips have a very tight tolerance in their width. Thus, the difference between the maximum width and the minimum width is typically less than 0.25 mm, or less than 0.20 mm, or even less than 0.125 mm along the length of the strip.

The polymeric sheet may take a variety of forms provided it is sufficiently flexible. However it is preferably a film, being non-porous and uniform across the sheet. Also, the polymeric sheet may be porous or perforated to improve the release of the sheet from the curable strip. The polymeric sheet may comprise holes or apertures.

The thickness of the polymeric sheet can be selected as desired according to the particular situation. However, thicknesses in the range of from 10 to 150 micrometres, preferably from 10 to 100 micrometres, is a suitable range.

The polymeric sheet may comprise a polyolefin, polyalphaolefin and/or combinations or copolymers thereof. The sheet may be made from a wide variety of materials, for example polyethylene, polyethylene terephthalate, polypropylene, and many other suitable polymers and/or combinations or copolymers thereof

The fibrous layer is preferably formed by a light weight fabric which provides good surface properties. The fabric may be woven or non-woven. Preferably the fabric comprises a weight in the range of from 1 to 200 g/m², preferably 1 to 50 g/m², more preferably 1 to 20 g/m².

The fibrous layer may be made from a wide variety of materials such as carbon, graphite, glass, metallised polymers, aramid, thermoplastic fibres and mixtures thereof. The fibrous layer preferably has an openness factor of 30% - 99%, or more preferably 40% - 70%. Openness factor is defined as the ratio of the area not occupied by the material to the total area on which the fibrous layer is applied. The observation can be made using a light microscope, the method is described in further detail in WO 2011/086266. The structure or laminate may further comprise an isolating layer. The isolating layer may comprise E-glass or S-glass, having a weight range of from 10 to 1800 g/m², preferably 20 to 1500 g/m², more preferably 20 to 150 g/m². The isolating layer reduces the structural damage caused by lightning strike as it electrically isolates the struck surface layer from the underlying composite structure.

Each of the isolating layer, electrical conductive layer and/or fibrous layer may be at least partially impregnated with a resin. The resin is preferably a curable thermosetting resin which may be selected from epoxy, isocyanate and acid anhydride, for example. Preferably the curable resin is an epoxy resin.

Suitable epoxy resins may comprise monofunctional, difunctional, trifunctional and/or tetrafunctional epoxy resins.

Suitable difunctional epoxy resins, by way of example, include those based on diglycidyl ether of bisphenol F, bisphenol A (optionally bromianted), phenol and cresol epoxy novolacs, glycidyl ethers of phenol-aldelyde adducts, glycidyl ethers of aliphatic diols, diglycidyl ether, diethylene glycol diglycidyl ether, aromatic epoxy resins, aliphatic polyglycidyl ethers, epoxidised olefins, brominated resins, aromatic glycidyl amines, heterocyclic glycidyl imidines and amides, glycidyl ethers, fluorinated epoxy resins, or any combination thereof.

Difunctional epoxy resins may be preferably selected from diglycidyl ether of bisphenol F, diglycidyl ether of bisphenol A, diglycidyl dihydroxy naphthalene, or any combination thereof.

Suitable trifunctional epoxy resins, by way of example, may include those based upon phenol and cresol epoxy novolacs, glycidyl ethers of phenol-aldehyde adducts, aromatic epoxy resins, aliphatic triglycidyl ethers, dialiphatic triglycidyl ethers, aliphatic polyglycidyl ethers, epoxidised olefins, brominated resins, triglycidyl aminophenyls, aromatic glycidyl amines, heterocyclic glycidyl imidines and amides, glycidyl ethers, fluorinated epoxy resins, or any combination thereof.

Suitable tetrafunctional epoxy resins include N,N, N',N'-tetraglycidyl-m-xylenediamine (available commercially from Mitsubishi Gas Chemical Company under the name Tetrad-X, and as Erisys GA-240 from CVC Chemicals), and N,N,N',N'-tetraglycidylmethylenedianiline (e.g. MY721 from Huntsman Advanced Materials).

In view of the length of the strip according to the invention, the strip is typically wound onto a bobbin or spool. A particularly suitable winding involves the strip passing up and down the bobbin as it is wound, like thread on a spool with multiple windings being possible before the strip winds on top of previous windings of strip. Such a method of winding is called "way-wound".

Before being wound on the bobbin, the strip may be brought into contact with a second backing sheet. Typically this will only be required when there is only one polymeric sheet on one outer face of the strip. This involves the face not covered in the polymeric sheet coming into contact with the second backing sheet. Unlike the polymeric sheet, the second backing sheet is preferably wider than the resin and fibres in the strip. This helps to prevent any adhesion of adjacent strips on the bobbin.

Optionally, a second backing sheet may be applied onto the polymeric sheet. Upon unwinding of the spool or bobbin, the second backing sheet may be located on the outer surface of the strip which is not covered by the polymeric sheet. This promotes release of the backing sheet without distortion of the fibres.

The backing sheet may be non-porous or may be porous to facilitate removal of the backing sheet from the strip upon or prior to its application in the lay up.

The process of manufacture of the strips according to the use of the invention is typically a continuous process.

In a typical process one or more rotary blades are positioned as the laminate or structure is brought into contact with the blade or blades. Generally it is desirable to produce strips of the same width from a single sheet of prepreg, thus preferably any blades are evenly spaced apart.

Before slitting, the structure or laminate can be manufactured in a conventional prepreg manufacturing process. As discussed above, it is conventional for a backing paper to be applied during manufacture. If this is the case then the paper must be removed before the laminate or structure passes to the slitting stage. In this embodiment, the polymeric sheet can be added before the laminate or structure passes to the slitting stage without generating unacceptable debris as is found when paper is used.

Alternatively, the laminate or structure can be manufactured with the polymeric sheet as the backing material instead of using paper. As the resin impregnation stage of manufacture can involve high temperatures, the polymeric sheet must be heat-tolerant in this embodiment.

However the laminate or structure is manufactured, it is generally the case that the polymeric sheet will have been pressed onto the resin and fibres under high pressure. This serves to form a stronger adhesive bond between the polymeric sheet and the resin and fibres and is believed to contribute to how the polymeric sheet acts to maintain the uniform width of the strip.

Thus, preferably the polymeric sheet has been applied under a compressive force before reaching the slitting stage, of at least 0.1 MPa, more preferably at least 0.2 MPa, most preferably at least 0.4 MPa. Typically, the polymeric sheet is applied under a compressive force by a set of compression rollers. The pressure exerted by the rollers is measured by passing Fujifilm Prescale pressure sensitive film in combination with the polymeric sheet through the rollers. This film is then removed from the rollers after compression and analysed using a Prescale FPD-8010E Digital analysis system to establish the average pressure exerted by the rollers.

As a result of the uniform width of the strip, it is therefore possible to automatically lay down a plurality of parallel strips in contact with one another.

There is disclosed herein a process of laying down a plurality of strips by means of an automated strip laying apparatus, the apparatus being arranged to lay the strips down parallel to each other with an overlap of less than 1.00 mm. Preferably the overlap is less than 0.80 mm, more preferably less than 0.60 mm, or even less than 0.40 mm. Adjacent strips may also be in contact with one another along at least part of their length.

Optionally, the laminate or structure may be in the form of a resin preimpregnated laminate or structure (prepreg). The fibrous layer and support layer may adhere to the conductive layer due to the tack of the resin.

Alternatively, the laminate or structure may be free from resin. Such a material could be infused with resin following the layup of the material in the mould. The fibrous layer may adhere to the conductive layer by melt bonding.

Optionally, the support layer may comprise an adhesive for adhering the support layer to the conductive layer.

Optionally, the fibrous layer may comprise a reinforcement fibrous material having a suitable weight to reinforce the composite structure whilst also providing desirable surface properties.

The laminate or structure comprises a metal comprising conductive layer to improve the electrical conductivity of the strip. This is particularly advantageous in order to provide lightening strike protection to the composite structure to which the strip is applied. The conductive layer may be in the form of an expanded metal foil, typically a copper, aluminum or bronze metal foil and/or combinations thereof. The metal foil may optionally be anodized.

The metal comprising conductive layer may comprise a curable material in the form of a curable organic compound and a filler. The filler may be adapted to self-assemble into conductive pathways upon cure of the organic compound.

The metal comprising conductive layer may comprise a conductive additive in the form of a conductive filler or conductive particles. The particles may comprise metallic flakes, metallic or carbon or graphite particles, nano particles or particles with a metal or carbon surface coating and/or combinations thereof. The conductive layer may be located on the fibrous layer. The conductive layer may also comprise metallic fibers or metal coated fibers, these can be in the form of a random mat or a woven fabric. The conductive fibers may be combined with nonconductive fibers. Optionally, the curable material comprises a curable organic compound and a filler, preferably a coated silver filler, and the filler and the organic compound exhibit an interaction during the cure of the organic compound, said interaction causing the filler to self-assemble into conductive pathways. We have discovered that the aforesaid conductive layers may be distorted to a greater or lesser extent by slitting of the material. The distortion is dependent on the selection of the backing sheet material and the properties of the conductive layer.

Optionally, the conductive layer comprises a reactive organic compound and electrically conductive filler that during the cure of the organic compound is capable of self-assembling into a heterogeneous structure comprised of a continuous, three-dimensional network of metal situated among (continuous or semi-continuous) polymer rich domains whose electrical conductivity is within several orders of magnitude of that of bulk metals. In another embodiment of the present invention, the conductive layer comprises a filled, curable material capable of self-assembling to form conductive pathways during a cure process.

Optionally, the composition is cured thereby forming conductive pathways therethrough, and the conductivity of the cured self-assembled composition is greater than 100 times the conductivity of a cured non-self-assembled composition having an equivalent amount of the conductive filler.

In a preferred embodiment of the present invention, the curable organic compound comprises diglycidyl ether of bisphenol F or of bisphenol A, and the curable organic compound further comprises a cure agent, preferably comprising a polyamine anhydride adduct based on reaction between phthalic anhydride and diethylenethamine. Other suitable curable organic compounds may comprise any of the resins and/or their components, either alone or in combination, as hereinbefore described. The conductive layer functions as a lightning strike protectant (LSP), where the composition further provides shielding of electromagnetic radiation having a frequency of between 1 MHz and 20 GHz, wherein said shielding reduces the electromagnetic radiation by at least 20 decibels.

Because of the heterogeneous structure formed, the LSP composition is able to induce a percolated network of conductive particles at particle concentrations considerably below that of traditional compositions that possess homogenous structures comprised of particles uniformly situated throughout the polymer matrix. Moreover, the heterogeneous structure formed during curing permits the sintering of particles thereby eliminating contact resistance between particles and in turn leading to dramatic improvements in thermal and electrical conductivity. Moreover, the continuous pathway of sintered metal permits carrying of substantial amounts of heat and electrical current encountered during a lightning strike event. The combination of lower filler loading and the related self-assembling of continuous pathways permits LSP materials that are lighter weight and easier to manufacture and repair which are desirable for fuel savings, payload capacity reasons, and construction and repair reasons.

Due to its isotropic nature, the composition of the conductive layer is conductive in all orthogonal directions, thereby lending to significantly improved electrical and thermal conductivity in the z-direction of composite structures. In turn, this improvement allows for considerable reduction in capacitive effects and heat buildup associated with non-conductive resins layers present in composite laminate as well as existing EMF LSP systems and the like.

In another embodiment of the present invention, because of the organic component's ability to react and form covalent bonds, it can be easily co-cured with or cured on reactive or non-reactive (e.g. thermoplastic or a previously reacted thermoset) substrates, respectively. In addition, proper selection of resin chemistry potentially affords the replacement of one or more layers typically found on the outer part of aircraft, such as primer and topcoat layers used to paint the aircraft. Furthermore, with appropriate selection of filler, is capable of providing lighting strike and corrosion performance without the need of an isolation ply. Furthermore, because of its highly conductive, isotropic nature it is capable of being used as a multifunctional material for the purpose of protection against lighting strikes and, but not limited to, shielding against electromagnetic fields, eliminating buildup of static charge, and a heat conduit for melting ice (e.g. deicing material).

Furthermore, the uncured (A-staged or B-staged, but not C-staged) conductive layer composition has desirable handling properties and is easily adaptable to various application forms. Such forms include, but are not limited to, a dispensable adhesive, a spray coating, an adhesive film, or as resin to be used in or in conjunction with a composite fiber prepreg or tape as herein described.

Optionally, the self-assembling composition may be used to produce a laminate structure of two or more layers such that the top layer comprises the conductive self-assembling composition and the underlying layers comprise lighter weight, electrically conductive or non-conductive resin layers. Furthermore, the laminate structure affords increased surface conductivity while maintaining a given weight relative to a monolithic film of lower surface conductivity. Furthermore, the thickness of each layer can be varied to further increase surface conductivity while maintaining a given weight. Furthermore, in an embodiment of the present invention, the uncured conductive composition is employed in combination with an existing LSP systems to create a unique hybrid structure thereby producing attractive combinations of LSP protection and weight. Examples include, but are not restricted to, the self-assembling material used as a B-staged film for embedding solid metal foils, EMFs, metalized fibers, metalized woven fibers, metalized non-wovens (e.g. veils), or metal-carbon fiber co-weaves.

Optionally, the conductive layer further provides secondary protection to a substrate. For example, though an initial lightning strike may create physical damage in the immediate area of the strike, electrical current may surge throughout the substrate/structure and damage distant electrical components or surfaces. The self-assembled conductive material provides a means for dissipating and controlling this electrical surge in addition to providing primary protection to the immediate area of the strike.

Optionally, the conductive layer is capable of electrically bridging interfaces associated with the assembly of different sections of LSP materials. Additionally, the conductive layer is applied as an uncured spray coating, uncured (not C-staged) film adhesive, or as flexible cured film that is bonded using a secondary adhesive or resin that is optionally filled with a conductive filler. Furthermore, the conductive layer makes it possible to use automated equipment for applying LSP to the composite structure or laminate prior to or after slitting. Examples include, but are not restricted to, applying the self-assembling material in spray form using automated spray equipment such that the sprayed material is applied to uncured fiber reinforced polymer skin on a male mold structure, or to the surface of a female mold structure which has been pretreated with a release agent. The self-assembling composition layer used as an outer conductive layer may provide lighting strike protection (LSP) and electromagnetic interference (EMI) shielding when used in applications such as aircraft components.

Optionally, the enhanced electrical conductivity of the self-assembling compositions may be achieved by combination of thermosetting polymers with electrically conductive additives, such as metal flakes and/or conductive nanoparticles dispersed substantially uniformly throughout or on the film. Beneficially, these compositions may substantially reduce the need for the use of relatively heavy metal screens to enhance the electrical conductivity of the conducting layer, providing substantial reductions in weight. For example, weight savings of about 50 to 80% may be achieved as compared to conductive surfacing films embedded with metal screens. The absence of such screens embodiments of the surfacing films disclosed herein may further facilitate ease of manufacturing and reduce the cost of composite components formed with these surfacing films.

In particular, it has been discovered that embodiments of the conductive layer comprising conductive additives of silver flake exhibit significantly enhanced conductivity. As discussed below, without being bound by theory, it is believed that, in selected concentrations, for example, greater than about 35 wt. %, the silver flake adopts a substantially interconnected, lamellar configuration throughout the composition. This lamellar configuration provides the self-assembling conductive layer with a substantially uniform continuous conductive path and relatively high conductivity/low resistivity. For example, a conductive layer having resistivity values on the order of about 10 to 50 mΩ/sq in plane may be achieved. The resistivity of these self-assembling conductive layers may be further lowered to values on the order of about 0.2 to 15 mΩ/sq by the addition of other conductive additives, such as silver nanowires. Notably, these resistivities are comparable to metals such as aluminum (e.g., about 0.2 mΩ/sq), indicating the feasibility of replacing heavy, screen-containing surfacing films surfacing films formed from embodiments of the conductive compositions disclosed herein.

The resistivity is measured by a power source (TTi EL302P programmable 30V/2A power supply unit, Thurlby Thandar Instruments, Cambridge, UK) that is capable of varying both voltage and current. A composite specimen is contacted with the electrodes (tinned copper braids) of the power source and held in place using a clamp (ensure electrodes do not touch each other or contact other metallic surfaces as this will give a false result). The clamp has a non-conductive coating or layer to prevent an electrical path from one braid to the other. A current of 1 ampere is applied and the voltage noted. Using Ohm's Law resistance can then be calculated (V/I).

The conductive composition may also be tailored to meet the requirements of various applications by adjusting the type and/or amount of the conductive additives. For example, electrostatic discharge (ESD) protection may be enhanced if the conductive additives or fillers are provided in a concentration sufficient to provide the composition with a surface resistivity within the range of approximately 1 Ω/sq to 1×10⁸ Ω/sq. In another example, electromagnetic interference (EMI) shielding protection may be enhanced if the conductive additives are provided in a concentration sufficient to provide the composition with a surface resistivity within the range of approximately 1×10⁻⁶ to 1×10⁴ Ω/sq. In a further example, lighting strike protection (LSP) may be enhanced if the conductive additives are provided in concentration sufficient to provide the composition with a surface resistivity within the range of approximately 1×10⁻⁶ to 1×10⁻³ Ω/sq.

Metals and their alloys may be employed as effective conductive additives or fillers, owing to their relatively high electrical conductivity. Examples of metals and alloys for use with embodiments of the present disclosure may include, but are not limited to, silver, gold, nickel, copper, aluminum, and alloys and mixtures thereof. In certain embodiments, the morphology of the conductive metal additives may include one or more of flakes, powders, fibers, wires, microspheres, and nanospheres, singly or in combination.

Optionally, precious metals, such as gold and silver, may be employed due to their stability (e.g., resistance to oxidation) and effectiveness. In other embodiments, silver may be employed over gold, owing to its lower cost. It may be understood, however, that in systems where silver migration may be problematic, gold may be alternatively employed. Beneficially, as discussed below, it is possible for silver and gold filled epoxies to achieve surface resistivities less than about 20 mΩ/sq.

Optionally, the conductive layer may comprise metal coated particles or fillers. Examples of metal-coated particles may include metal coated glass balloons, metal coated graphite, and metal coated fibers. Examples of metals which may be used as substrates or coatings may include, but are not limited to, silver, gold, nickel, copper, aluminum, and mixtures thereof.

Optionally, the conductive additives or fillers may comprise conductive veils. Examples of such conductive veils may include, but are not limited to, non-woven veils coated with metals, metal screens/foils, carbon mat, or metal coated carbon mat. Examples of metals which may be used as may include, but are not limited to, silver, gold, nickel, copper, aluminum, and mixtures thereof.

Non-metals suitable for use as conductive additives or fillers with embodiments of the present disclosure may include, but are not limited to, conductive carbon black, graphite, antimony oxide, carbon fiber.

Nanomaterials suitable for use as conductive additives or fillers with embodiments of the present disclosure may include carbon nanotubes, carbon nanofibers, metal coated carbon nanofibers, metal nanowires, metal nanoparticles, graphite (e.g., graphite nanoplatelets), and nanostrands. In certain embodiments, largest mean dimension of the nanomaterials may be less than 100 nm. Carbon nanotubes may include single-walled carbon nanotubes (SWNTs), double-walled carbon nanotubes (DNTs), and multi-walled carbon nanotubes (MWNTs). The carbon nanotubes, optionally, may also be surface functionalized. Examples of functional groups that may be employed for functionalization of carbon nanotubes may include, but are not limited to, hydroxy, epoxy, and amine functional groups. Further examples of functionalized carbon nanotubes may include, Nano-In-Resin from Nanoledge, a CNT/epoxy concentrate with CNTs pre-dispersed in an epoxy matrix.

Examples of carbon nanofibers suitable for use as conductive additives or fillers with embodiments of the present disclosure may include bare carbon nanofibers (CNF), metal coated CNF, and NanoBlack II (Columbian Chemical, Inc.). Metal coatings may include, but are not limited to, copper, aluminum, silver, nickel, iron, and alloys thereof.

Examples of nanowires suitable for use as conductive additives with embodiments of the present disclosure may include, but are not limited to, nickel, iron, silver, copper, aluminum and alloys thereof. The length of the nanowires may be greater than about 1 µm, greater than about 5 µm, greater than about 10 µm, and about 10 to 25 nm. The diameter of the nanowires may be greater than about 10 nm, greater than about 40 nm, greater than about 70 nm, greater than about 150 nm, greater than about 300 nm, greater than about 500 nm, greater than about 700 nm, and greater than about 900 nm. Examples of silver nanowires may include SNW-A60, SNW-A90, SNW-A300, and SNW-A900 from Filigree Nanotech, Inc.

Optionally, the conductive additive or filler may comprise silver flakes. As discussed in detail below, it has been identified that the use of silver flake, and in particular, silver flake in combination with silver nanowire, significantly enhances the electrical conductivity of thermosetting compositions to levels that are approximately equal to or greater than that of metals. Furthermore, silver flakes may be combined with other conductive additives as discussed herein to further enhance the conductivity of the thermosetting composition. Examples include, but are not limited to, nanowires (e.g., silver nanowire), carbon nanotubes, metal coated glass balloons (e.g., silver-coated glass balloons). The conductive particles may have an average size in the range of from 0.01 µm to 3 mm, preferably of from 0.05 µm to 2 mm, more preferably of from 0.1 µm to 1 mm, and even more preferably of from 0.5 µm to 0.1 mm or from 1 µm to 50 µm, and/or combinations of the aforesaid ranges. The average particle size is measured using a Malvern Mastersizer 3000.

For example, compositions including silver flake may range in surface resistivity from as low as about 0.2 mΩ/sq at about 63 wt. % loading on the basis of the total weight of the composition (with additions of about 3 wt. % silver nano wires) to greater than about 4500 mΩ/sq at about 18 wt. % with silver flake alone. The ability to tailor the resistivity of the composition within such a broad range is significant, as the loading fraction of conductive additives within the composition may be adjusted for any of ESD, EMI, and LSP applications.

Prefereably the conductive layer comprises a silver flake comprising a particle size distribution in the range of from 2 to 15 µm (D50), from 20 to 65 (D100), from 20 to 30 (D90), as measured using a Malvern Mastersizer 3000.

A totally unexpected advantage to the use of the novel silver flake is that high electroconductivities may be achieved in compositions comprising organic resin materials and silver flake at levels far below those necessary when the silver flake of the prior art has been used. This surprising result is apparently assignable to the geometry of the flake.

The silver flake for use in the invention is preferably less than 0.2 micron thick and most advantageously about 0.1 micron thick or less; individual flakes may appear to be folded back upon themselves.

Bulk density of the preferred flake is below about 1.0 gram per cc. The most preferred products seem to have bulk densities below 0.85 gram per cc, especially in the range of about 0.15 to about 0.5 gram per cc.

A remarkable property of the flake is the efficiency by which it forms an electroconductive network in a nonconductive matrix. This appears to be a result of the geometry of the flake and its consequent movement and ultimate placement when it is mixed in various liquids. It is also possible that the process of preparation provides a particularly clean surface (for example, one free of contaminants such as oxide) which further enhances the electroconductive efficiency of the material.

Because of the flake's geometry, it is usually neither convenient no economic to use the flake in those applications which require resistivities of less than about 40 ohm per metre (1.0 ohm per linear inch) of conductor using, as a defining model, a 1.27 mm (0.050-inch) wide conductor having a thickness of 25.4 µm (one mil). However, when one is interested in achieving resistivities of, say, in the 120 to 800 ohm per metre (3 to 20 ohms per inch) range, very great advantages are achieved. Indeed, such resistivities may be achieved at loadings of less than 60% by weight, based on the final coating weight, of silver flake in thin (say 25.4 to 127 µm (1 to 5 mils) thick) conductive coatings of the type laid down from a solvent-based coating composition, when only the flake and organic resin matrix are present in the coating after drying off the liquid vehicle.

The loading may be reduced to less than 50% by weight while still maintaining conductivity in bulk conductive plastic compositions as opposed to thin coatings.

Once the surprising advantage of a flake of such geometry is evident, there are believed to be many ways to prepare such an ultra thin flake. However, most such processes will be uneconomical. One process appears to be particularly desirable, i.e., the formation of the flake at the interface of a 2-phase reaction system. Such formation of the flake is contemporaneous with the formation of the metal, and thereby provides a flake without the need of first forming silver metal and, only subsequently, subjecting the prior-formed metal to mechanical flake-shaping procedures. It is advantageous if the dispersed phase of the reaction system is liquid, and it is particularly advantageous if the dispersed phase is liquid and comprises a reducing agent that, on reaction with silver ions in the continuous phase, causes silver to plate out on the dispersed phase and, then, continuously break off to present new flake forming interface to a new supply of silver ions. Preferably the flake is coated, for example with a stearic acid.

Although metals and metal alloys are preferred for use in several embodiments of the present invention, the conductive filler may comprise a conductive sinterable non-metallic material. In an alternate embodiment of the present invention the filler may comprise a hybrid particle wherein one type of filler, for example a non-conductive filler, is coated with a conductive, sinterable material, such as silver. In this manner, the overall amount of silver used may be reduced while maintaining the sinterability of the filler particles and conductivity of the sintered material.

In an embodiment of the present invention, the filler component must be able to interact with the organic compound to impart a heterogeneous structure in the finished material. In a preferred embodiment of the present invention as discussed above, this is accomplished through the interaction of a polar organic compound with a non-polar filler. For preferred filler materials, such as metals, the filler is coated with a material comprising the desired degree of polarity. In one preferred embodiment of the present invention, the filler coating comprises a non-polar fatty acid coating, such as stearic, oleic, linoleic, and palmitic acids. In a still further embodiment of the present invention, the filler coating comprises at least one of several non-polar materials, such as an alkane, paraffin, saturated or unsaturated fatty acid, alkene, fatty esters, waxy coatings, or oligomers and copolymers. In additional embodiments of the present invention, non-polar coatings comprise organotitanates with hydrophobic tails or silicon based coatings such as silanes containing hydrophobic tails or functional silicones. In a further embodiment of the present invention, the coating (or surfactant, coupling agent, surface modifier, etc.) is applied to the filler particle prior to the particles' incorporation into the curable composition. Examples of coating methods are, but not limited to, are deposition of the coating from an aqueous alcohol, deposition from an aqueous solution, bulk deposition onto raw filler (e.g. using a spray solution and cone mixer, mixing the coating and filler in a mill or Attritor ), and vapor deposition. In yet a further embodiment, the coating is added to the composition as to treat the filler prior to the reaction between the organic components (namely the resin and curative).

In an alternate embodiment of the present invention, the polarity of the filler/coating and polymer are reversed wherein the filler/coating comprises a polar moiety and the organic compound comprises a non-polar polymer. Similarly, in an embodiment of the present invention, in which a repulsive effect other than polarity is employed to drive the self-assembly, the active properties of the filler and organic components may be interchanged.

In a preferred embodiment of the present invention the organic compound comprises an epoxy resin and a cure agent. In this embodiment, the organic compound comprises from about 60 to about 100 volume percent of the total composition. In this embodiment, the organic compound comprises approximately from 70 to 85 percent by weight of a diglycidyl ether of a bisphenol compound, such as bisphenol F, and 15 to 30 percent by weight of a cure agent, such as a polyamine anhydride adduct based on reaction between phthalic anhydride and diethylenetriamine.

In additional embodiments of the present invention, suitable organic compounds comprise monomers, reactive oligomers, or reactive polymers of the following type:
siloxanes, phenolics, novolac, acrylates (or acrylics), urethanes, ureas, imides, vinyl esters, polyesters, maleimide resins, cyanate esters, polyimides, polyureas, cyanoacrylates, benzoxazines, unsaturated diene polymers, and combinations thereof. The cure chemistry would be dependent on the polymer or resin utilized in the organic compound. For example, a siloxane matrix can comprise an addition reaction curable matrix, a condensation reaction curable matrix, a peroxide reaction curable matrix, or a combination thereof. Selection of the cure agent is dependent upon the selection of filler component and processing conditions as outlined herein to provide the desired self-assembly of filler particles into conductive pathways.

The self-assembling lightning strike protectant composition comprises diglycidyl ether of bisphenol F (DGEBF) resin or of bisphenol A (DGEBA) resin (or a blend of DGEBF with diglycidyl ether of dipropylene glycol), an amine adduct curative based on the reaction with diethylene thamine and phthalic anyhydride, and silver flake coated with stearic acid (surface area of about 0.8 m²/g, and weight loss in air at 538 °C of about 0.3%), and optionally a solvent based on a blend of toluene, methyl ethyl ketone, ethyl acetate, and ligroine (35%, 32,%, 22%, 11 % by weight, respectively). These coatings were converted into a number of different application forms, applied and co-cured with a composite laminate structure (test panel), and tested for lightning strike performance. These LSP materials and methods ultimately provide protection against lightning strikes because of their ability to form highly conductive, continuous electrical pathways in all orthogonal directions. In other words, the material's ingredients self-assemble to form a conductive three-dimensional mesh during the curing of the material. Furthermore, these materials enable direct and indirect protection at substantially reduced weight relative to state of the art expanded metal foil protection systems. Ultimately, the self-assembling LSP materials of the embodiments of the present invention have the potential to overcome many of the issues encountered with state of art materials such as handling, processing, automation, repair issues, among other issues mentioned earlier.

The organic compound of the self-assembling conductive layer may comprise thermosetting resins, which may include, but are not limited to, resins such as those discussed above. In preferred embodiments, the thermosetting resins may include one or more of epoxies, bismaleimides (BMI), cyanate esters, phenolics, benzoxazines, and polyamides. In other embodiments, the thermosetting resin may include diglycidylether of bisphenol A, diglycidylether of tetrabromo bisphenol A, and tetraglycidylether methylenedianiline, 4-glycidyloxy-N,N'-diglycidylaniline, and combinations thereof. The thermosetting resins may further include chain extension agents and tougheners. In an embodiment, the thermosetting resins may be present in a concentration ranging between about 5 to 95 wt. %, on the basis of the total weight of the composition. In other embodiments, the thermosetting resins may be present in a concentration ranging between about 20 to 70 wt. %,

Additional thermosetting resins may also be added to adjust the tack and drape of the composition. Embodiments of such resins may include, but are not limited to, multi-functional epoxy resins. Examples of di-and multi-functional epoxy resins may include, but are not limited to, commercially available resins such as those sold under trade names MY 0510, MY 9655, Tactix 721, Epalloy 5000, MX 120, MX 156. The additional epoxy resins may be present in an amount ranging between about 0 to 20 wt. %, on the basis of the total weight of the composition.

After addition of the thermosetting resins or polymers to a mixing vessel, the mixture may be allowed to mix using a high speed shear mixer. Mixing may be performed until the thermosetting resins are mixed substantially uniformly. For example, in one embodiment, mixing may be performed for about 50 to 70 minutes at a speed of about 1000 to 5000 rpm.

In other embodiments, toughening agents may also be added to the composition to adjust the film rigidity and surface hardness of the surfacing film. In certain embodiments, the toughening agents may be polymeric or oligomeric in character, have glass transition temperatures below 20°C (more preferably below 0° C or below -30° C or below -50° C) and/or have functional groups such as epoxy groups, carboxylic acid groups, amino groups and/or hydroxyl groups capable of reacting with the other components of the compositions of the present invention when the composition is cured by heating. In certain embodiment, the toughening agents may comprise elastomeric toughening agents. In other embodiments, the toughening agents may comprise core-shell rubber particles or liquid rubbers. Examples of toughening agents may be found in U.S. Pat. No. 4,980,234, U.S. Patent Application Publication No. 2008/0188609, and International Patent Publication No. WO 2008/087467. The concentration of the toughening agents may range between about 5 to 40 wt % on the basis of the total weight of the composition. The concentration of the toughening agent may further range between about 1 to 30 wt. %.

Further examples of elastomeric toughening agents may include, but are not limited to, carboxylated nitriles (e.g., Nipol 1472, Zeon Chemical), carboxyl-terminated butadiene acrylonitrile (CTBN), carboxyl-terminated polybutadiene (CTB), polyether sulfone (e.g., KM 180 PES-Cytec), PEEK, PEKK thermoplastic, and core/shell rubber particles (e.g. Kaneka's MX 120, MX 156 and other MX resins with pre-dispersed core/shell rubber nanoparticles).

Embodiments of the conductive additives may include, but are not limited to, metals and metal alloys, metal-coated particles, surface functionalized metals, conductive veils, non-metals, polymers, and nano-scale materials. The morphology of the conductive additives may include one or more of flakes, powders, particles, fibers, and the like. In an embodiment, the total concentration of all conductive additives may range between about 0.1 to 80 wt. %, on the basis of the total weight of the composition. In alternative embodiments, the concentration of all conductive additives may range between about 0.5 to 70 wt. %.

The strip may be applied by an Automated Tape Laying (ATL) machine. The rate of deposition of the ATL is faster than a standard hand layup process and the tension applied to the product is higher. The flexible polymeric substrate or sheet allows the absorption of at least part of the tension in the strip during is application in the ATL. This in turn prevents the metal layer from being distorted and enables accurate slitting or cutting of the laminate or structure to form the strip as hereinbefore described.

There is disclosed herein a strip of curable prepreg comprising unidirectional fibres aligned with the length of the strip, the fibres being at least partially impregnated with curable thermosetting resin and comprising a flexible polymeric sheet on an outer face of the strip, the strip further comprising a conductive layer. The conductive layer may be in the form of a metal layer.

There is disclosed herein a laminate or structure comprising a fibrous reinforcement material layer, a resin material and a conductive layer.

The resin material may comprise a resin layer or film. The resin material may at least partially impregnate the reinforcement layer. The conductive layer may comprise a metal material layer.

The laminate or structure may further comprise the aforesaid substrate or support material in the form of a flexible polymeric sheet. The laminate or structure may be slittable or cuttable to form the strip of the invention.

In a preferred embodiment, the flexible polymeric sheet may comprise a low density polyethylene (LDPE) sheet material, a high density polyethylene (HDPE) sheet material, or a polyethylene terephthalate (PET) sheet material.

The invention will now be illustrated, by way of example, and with reference to the following figures, in which:

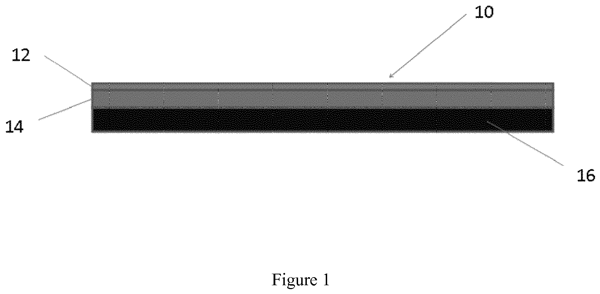

Figure 1 is a schematic representation of a cross-section of a laminate or structure according to the present invention. The Figure shows a laminate or structure 10 comprising a conductive layer 14, a fibrous layer 16 and a support layer 12 adhering to an outer face of the laminate or structure, the support layer preventing distortion of the conductive layer during slitting of the laminate or structure to form a conductive strip. The support material 12 adheres to the surface of the conductive layer 14. The structure 10 further includes a resin, the resin at least partially impregnating the fibrous layer and/or conductive layer. The tack of the resin enables the support material 12 to adhere to the surface of the conductive layer 14.

The support material 12 comprises a flexible polymeric sheet in the form of a polyethylene polymer material. The fibrous layer is in the form of a light weight non woven fabric of 1 to 100 gsm (g/m²), preferably 1 to 50 gsm and more preferably 1 to 20 gsm. The resin is a thermoset resin as hereinbefore described. The conductive layer 14 is formed from an expanded metal foil. Suitable metal layers may be sourced from Dexmet Corporation under the Trademark Microgrid. Typically these metals are in the form of a calendared foil to form a metal mesh. The areal weight of these materials is typically in the range of from 25 to 200 gsm (g/m²) and the resistivity ranges from 0.1 to 1 Ohm/m². The thickness of the metal material may range from 0.02 to 0.14 mm. Preferred metals are copper, silver, bronze or gold.

### Example 1

Laminates were produced by combining a fibrous layer in the form of a non woven lightweight polyamide veil V12 of weight 12 g/m² (gsm) as supplied by Protechnic, with an expanded copper foil of 195 g/m² as supplied by Dexmet and 42% by weight of an epoxy resin M21 as supplied by Hexcel. The material was supported on a support layer of either PET or LDPE as supplied by Huhtamaki and pressed in to the laminate with a pressure of 1 MPa.

A Comparative Example was carried out as above with a conventional silicon coated paper backing layer in place of the PET or LDPE support layer. The silicon coated paper backing layer was a #50 paper release as supplied by Papertec Inc.

Slitting of the laminates was performed by passing the laminates through a series of parallel slitters, which are precisely arranged to slit the prepreg into slit tapes of a specified width with a +/- 0.125 mm tolerance along the length of the strips or tapes.

The width was sampled at regular intervals along their length of each tape using a benchtop laser micrometer (BenchMike 283). Measurements were taken every 0.02 m along aim length of tape, and again when laid up on a mould surface. The standard deviation of width measurements for each strip was calculated and used to compare the control over cutting thickness provided by each embodiment.

We found that the variation of the width around the average width of the tape was greater for the paper backing layer by a margin of greater than 10% in comparison to the PET or LDPE backing materials. Such a margin is significant in the precision lay up of slit tapes for aerospace applications.

### Example 2

Additional curable laminates were prepared by combining the same polyamide veil impregnated with epoxy resin described above in Example 1 in combination with a conductive layer in the form of a diglycidyl ether of bisphenol F (DGEBF) resin, an amine adduct curative based on the reaction with diethylene thamine and phthalic anyhydride, and silver flake coated with stearic acid (surface area of the flake 0.8 m²/g, and weight loss in air at 538 °C of about 0.3%).

More curable laminates were prepared by combining the same polyamide veil as in Example 1 impregnated with epoxy resin as described above with a conductive layer.

This conductive layer was prepared by addition of the following components to a mixing vessel and mixing the components using a high-speed shear lab mixer. About 100 parts by weight of the epoxy resin, including an approximately 60:40:10 ratio of diglycidylether of bisphenol A (DER 331-Dow Chemical) to tetraglycidylether methylenedianiline (MY9655-Huntsman) to diglycidylether of tetrabromo bisphenol A (DER 542-Dow Chemical), was added to the mixing vessel and stirred for about 30 minutes at about 1000 rpm. A bisurea (CA 150), butylated hydroxytoluene and dicy were added, MEK was added as a solvent with the epoxy resins to adjust the rheology and solid content of the composition, as necessary. Different silver flakes were employed in the composition as set out below.

Silver flake (e.g. AB 0022 from Metalor Technologies), was employed as a conductive additive in the composition of the conductive layer. The particle size distribution of the AB 0022 silver flake is: about 13.4 µm (D50), about 28.5 (D90), and about 64.5 (D100). The conductive surfacing film prepared from the composition was found to exhibit a resistivity of about 12.5 mΩ/sq. In a second trial silver flake (e.g. EA 0295-Metalor Technologies) was employed as an alternative conductive additive in the same composition. The particle size distribution of the EA 0295 silver flake is: about 5.2 µm (D50), about 13.34 (D90), and about 32.5 (D100), which is about half the size of the AB 0022 silver flake. The conductive surfacing film prepared from the composition was found to exhibit a resistivity of about 152 mΩ/sq. Samples of the materials with the different conductive layer compositions were supported on either PET or LDPE as supplied by Huhtamaki and pressed into the laminate with a pressure of 1 MPa.

Again a Comparative Example was carried out as above with a conventional silicon coated paper backing layer in place of the PET or LDPE support layer. The silicon coated paper backing layer was a #50 paper release as supplied by Papertec Inc.

Slitting of the laminates was performed by passing the laminates through a series of parallel slitters, which are precisely arranged to slit the prepreg into slit tapes of a specified width with a +/- 0.125 mm tolerance along the length of the strips or tapes.

Again the width was sampled at regular intervals along their length of each tape using a benchtop laser micrometer (BenchMike 283). Measurements were taken every 0.02 m along aim length of tape, and again when laid up on a mould surface. The standard deviation of width measurements for each strip was calculated and used to compare the control over cutting thickness provided by each embodiment.

We found that the variation of the width around the average width of the tape was greater for the paper backing layer by a margin of greater than 8% in comparison to the PET or LDPE backing materials. Such a margin is significant in the precision lay up of slit tapes for aerospace applications.

We have discovered that in the absence of a suitable backing layer, conductive layers containing the aforesaid resin with conductive particles are distorted upon slitting. We found that both support materials provided good width tolerances when slit. However, PET also provided an improved stretch and distortion resistance during use of the slit strips in an automated layup machine. Advantageously selecting a PET or polyethylene backing layer results in substantially reduced distortion.

There is thus disclosed a laminate or structure and a strip of moulding material as herein before described. The strip may comprise a conductive layer in the form of a metal layer to improve the conductivity of the strip. This is particularly advantageous in order to provide lightening strike protection to the composite structure which is manufactured from the strip. The metal layer may be in the form of an expanded metal foil, typically a copper or bronze metal foil.

The strip may be applied by an Automated Tape Laying (ATL) machine. The flexible polymeric substrate or sheet allows the absorption of at least part of the tension in the strip during is application in the ATL. This in turn prevents the metal layer from being distorted and enables accurate slitting or cutting to form the strip as hereinbefore described. The flexible polymeric sheet may comprise a low density polyethylene (LDPE) sheet material, a high density polyethylene (HDPE) sheet material, or a polyethylene terephthalate (PET) sheet material.

## Claims

1. The use of a support layer during slitting of a laminate or structure into a strip to reduce variation in the width of the slit strip, the laminate or structure comprising a metal-comprising conductive layer and a fibrous layer; wherein the support layer adheres to an outer face of the laminate or structure and is in contact with the conductive layer; and further wherein the support layer comprises a flexible polymeric sheet which comprises a polyalphaolefin, a polyalphaolefin copolymer or a polyethylene terephthalate sheet material.

2. The use according to claim 1, wherein the fibrous layer adheres to the conductive layer.

3. The use according to claim 1 or 2, wherein the laminate or structure further includes a resin, the resin at least partially impregnating the fibrous layer and/or conductive layer.

4. The use according to any of the preceding claims, wherein the laminate or structure comprises an isolating layer.

5. The use according to claim 1, wherein the metal is in the form of a metal mesh or a calendared metal foil.

6. The use according to any of the preceding claims, wherein the flexible polymeric sheet is a polyethylene or polyethylene terephthalate sheet.

7. The use according to any of the preceding claims, wherein the flexible polymeric sheet is porous.

## Patentansprüche

1. Verwendung einer Trägerschicht während des Spaltens eines Laminats oder einer Struktur zu einem Band, um eine Variation in der Breite des Spaltbandes zu reduzieren, wobei das Laminat oder die Struktur eine metallhaltige leitfähige Schicht und eine Faserschicht umfassen; wobei die Trägerschicht an einer äußeren Fläche des Laminats oder der Struktur haftet und in Kontakt mit der leitfähigen Schicht ist; und wobei ferner die Trägerschicht eine flexible Polymerfolie umfasst, die ein Polyalphaolefin, ein Polyalphaolefin-Copolymer oder ein Polyethylenterephthalat-Folienmaterial umfasst.

2. Verwendung nach Anspruch 1, wobei die Faserschicht an der leitfähigen Schicht haftet.

3. Verwendung nach Anspruch 1 oder 2, wobei das Laminat oder die Struktur ferner ein Harz aufweisen, wobei das Harz die Faserschicht und/oder die leitfähige Schicht mindestens teilweise imprägniert.

4. Verwendung nach einem der vorhergehenden Ansprüche, wobei das Laminat oder die Struktur eine Isolierschicht umfassen.

5. Verwendung nach Anspruch 1, wobei das Metall in Form eines Metallgewebes oder einer kalandrierten Metallfolie vorliegt.

6. Verwendung nach einem der vorhergehenden Ansprüche, wobei die flexible Polymerfolie eine Polyethylen- oder Polyethylenterephthalatfolie ist.

7. Verwendung nach einem der vorhergehenden Ansprüche, wobei die flexible Polymerfolie porös ist.

## Revendications

1. Utilisation d'une couche de support durant la refente d'un stratifié ou d'une structure pour produire une bande afin de réduire une variation dans la largeur de la bande produite par refente, le stratifié ou la structure comprenant une couche conductrice contenant un métal et une couche fibreuse ; dans laquelle la couche de support adhère à une face externe du stratifié ou de la structure et est en contact avec la couche conductrice ; et en outre dans laquelle la couche de support comprend une feuille polymère flexible qui comprend une poly-alpha-oléfine, un copolymère de poly-alpha-oléfine ou un matériau sous forme de feuille de téréphtalate de polyéthylène.

2. Utilisation selon la revendication 1, dans laquelle la couche fibreuse adhère à la couche conductrice.

3. Utilisation selon la revendication 1 ou 2, dans laquelle le stratifié ou la structure contient en outre une résine, la résine imprégnant au moins en partie la couche fibreuse et/ou la couche conductrice.

4. Utilisation selon l'une quelconque des revendications précédentes, dans laquelle le stratifié ou la structure comprend une couche isolante.

5. Utilisation selon la revendication 1, dans laquelle le métal est sous la forme d'une maille métallique ou d'une feuille métallique calandrée.

6. Utilisation selon l'une quelconque des revendications précédentes, dans laquelle la feuille polymère flexible est une feuille de polyéthylène ou de téréphtalate de polyéthylène.

7. Utilisation selon l'une quelconque des revendications précédentes, dans laquelle la feuille polymère flexible est poreuse.
